# EUROPEAN PATENT APPLICATION

(11) **EP 2 071 544 A1**
(43) Date of publication of application: **17.06.2009**
(21) Application number: 08170535.2
(22) Date of filing: 02.12.2008
(51) Int. Cl.: G09B 5/02

(54) **Information processing system, its control method, information processing apparatus, and program**

(30) Priority: 03.12.2007 JP 2007312661
(71) Applicant: Canon Kabushiki Kaisha, Tokyo 146-8501 (JP)
(72) Inventor: Tadokoro, Yoshihisa, Ohta-ku Tokyo (JP)
(74) Representative: Sharp, Alan Cooper

(57) **Abstract**

An information processing system includes a first information processing apparatus (101) and a second information processing apparatus (102) which can share display data. The first information processing apparatus includes a first transmission means to transmit display data to the second information processing apparatus configured to display the display data, an input means to input an operational restriction applied to an object expressed on the display data transmitted by the first transmission means, a creation means to create instruction information based on the operational restriction input by the input means, and a second transmission means to transmit the instruction information created by the creation means to the second information processing apparatus. The second information processing apparatus includes a reception means to receive the instruction information transmitted from the second transmission means, and a restriction means to apply the operational restriction to an object on the transmitted display data based on the instruction information received by the reception means.

## Description

### BACKGROUND OF THE INVENTION

### Field of the Invention

The present invention relates to a technology capable of transmitting data to one or more apparatuses.

### Description of the Related Art

Information technologies are developing in various fields. For example, in the fields related to education or training, usage of electronic whiteboards replaceable with conventional blackboards is increasing. Further, usage of conventional paper media (e.g., textbooks or notebooks) is decreasing among students because of widely spread use of electronic devices represented by personal computers and personal digital assistants (PDAs).

As discussed in Japanese Patent Application Laid-Open No. 2004-126798, a system related to this kind of technology can be realized by a computer configured to distribute teaching materials from a teacher side via a network to a student side. According to this system, teaching materials include moving image data and the teacher side edits control information relating to a method for reproducing the moving image data (repeat, skip, etc) and saves the edited information on a server. The student side downloads the control information relating to the reproduction method from the server, in addition to the moving image data, and reproduces the moving image data. Thus, the system can realize moving image reproduction optimized for individual students.

Although not related to education or training, a group work system enabling a remote user to control an object is discussed in Japanese Patent Application Laid-Open No. 5-242027. This system relates to the control of an access right in a situation where an object is shared for a group work among a plurality of workstations. More specifically, the system can explicitly notify other users of the situation by displaying a person who has the right to access the object.

However, the above-described conventional systems have the following problems.

The system discussed in Japanese Patent Application Laid-Open No. 2004-126798 is basically targeted at an e-Learning type, not a group learning type, and therefore requires editing data beforehand for students and uploading the edited data to a teaching material server to let each student download the teaching materials to learn. In other words, this system cannot perform a real-time control of the teaching materials which have been delivered to the student side.

Moreover, the system discussed in Japanese Patent Application Laid-Open No. 5-242027 is basically oriented to a computer-based group work and is not directly available for the education or training. This system is chiefly usable for access control in the situation where one object is usable among two or more users. In other words, the conventional system gives no suggestion or idea as to remote control of the data delivered to the student side.

### SUMMARY OF THE INVENTION

Exemplary embodiments of the present invention are directed to a technique enabling an apparatus of an information distributor side to perform real-time control of an operational restriction applied to data delivered to an apparatus of an information user side.

According to a fist aspect of the present invention, there is provided an information processing apparatus as specified in claims 1 to 6, 8 and 9. According to a second aspect of the present invention, there is provided a method as specified in claims 7, 10, and 11. According to a third aspect of the present invention, there is provided a storage medium as specified in claims 12 and 13.

According to an exemplary embodiment of the present invention, an apparatus of an information distributor side can realize real-time control to apply an operational restriction to data delivered to an apparatus of an information user side.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments and features of the invention and, together with the description, serve to explain at least some of the principles of the invention.

Fig. 1 illustrates an example of an overall arrangement of a teaching system according to a first embodiment of the present invention.

Fig. 2 illustrates the internal arrangement of a teacher terminal device illustrated in Fig. 1.

Fig. 3 illustrates the internal arrangement of a student terminal device illustrated in Fig. 1.

Figs. 4A and 4B illustrate example screen images, when a teacher terminal device and a student terminal device display white board data.

Figs. 5A and 5B illustrate example screen images displayed when lock processing is performed individually for each object.

Figs. 6A and 6B illustrate example screen images displayed when lock processing is performed according to the type of object.

Figs. 7A and 7B illustrate example screen images displayed when lock processing is performed according to designation of area.

Figs. 8A and 8B illustrate example screen images displayed when unlock processing is performed.

Fig. 9 is a flowchart illustrating the processing performed by the teacher terminal device illustrated in Fig. 1.

Fig. 10 illustrates exemplary instruction information.

Fig. 11 is a flowchart illustrating the processing performed by the student terminal device illustrated in Fig. 1.

Fig. 12 illustrates exemplary instruction information.

Figs. 13A and 13B illustrate example screen images displayed when lock processing is performed on a page-by-page basis.

Figs. 14A and 14B illustrate example screen images displayed when lock processing is performed according to a page attribute.

Fig. 15 is a flowchart illustrating the processing performed by a teacher terminal device according to a second exemplary embodiment of the present invention.

Fig. 16 is a flowchart illustrating the processing performed by a student terminal device according to the second exemplary embodiment.

Figs. 17A to 17C illustrate exemplary lock setting information.

Fig. 18 is a flowchart illustrating the processing performed by a teacher terminal device according to a third exemplary embodiment of the present invention.

### DETAILED DESCRIPTION OF THE EMBODIMENTS

The following description of exemplary embodiments is illustrative in nature and is in no way intended to limit the invention, its application, or uses. Processes, techniques, apparatus, and systems as known by one of ordinary skill in the art are intended to be part of the enabling description where appropriate. It is noted that throughout the specification, similar reference numerals and letters refer to similar items in the following figures, and thus once an item is described in one figure, it need not be discussed for following figures.

An information processing system, an information processing method, an information processing apparatus, and related software program according to exemplary embodiments of the present invention are now described in detail with reference to the attached drawings. In an exemplary embodiment of the present invention, an information processing system is applied to a teaching system.

### First Exemplary Embodiment

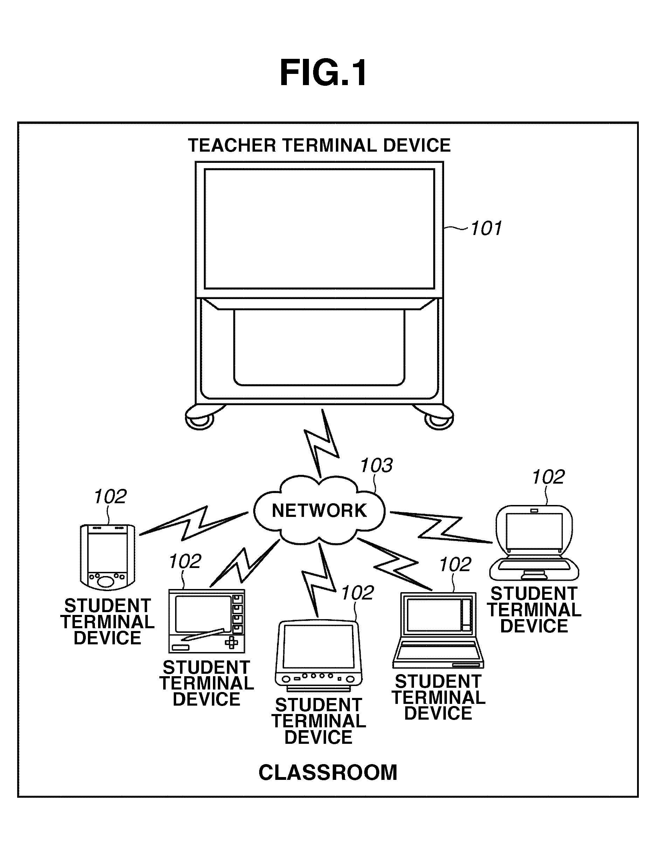

Fig. 1 illustrates an overall arrangement of a teaching system according to a first exemplary embodiment of the present invention

The teaching system includes a teacher terminal device 101 and one or more student terminal devices 102 connected via a network 103, for example an Intranet. In the present exemplary embodiment, the teacher terminal device 101 and the student terminal devices 102 are dedicated terminal devices, although each one can be replaced with a general purpose computer apparatus.

The teacher terminal device 101 includes functions of distributing white board data (delivery data), applying operational restriction (which may be referred to as "lock" in the following description) to part of the delivery data based on an instruction from a teacher (user instruction), and canceling the lock. The student terminal device 102 includes functions of receiving the white board data (delivery data) from the teacher terminal device 101, and using the delivery data.

Further, the student terminal device 102 includes a function of performing lock/unlock processing on at least part of the delivery data based on an instruction from the teacher terminal device 101. The white board data is delivery data (i.e., data transmitted from the teacher terminal device 101 to the student terminal device 102) and data to be displayed on an electronic white board. For example, the white board data corresponds to teaching materials.

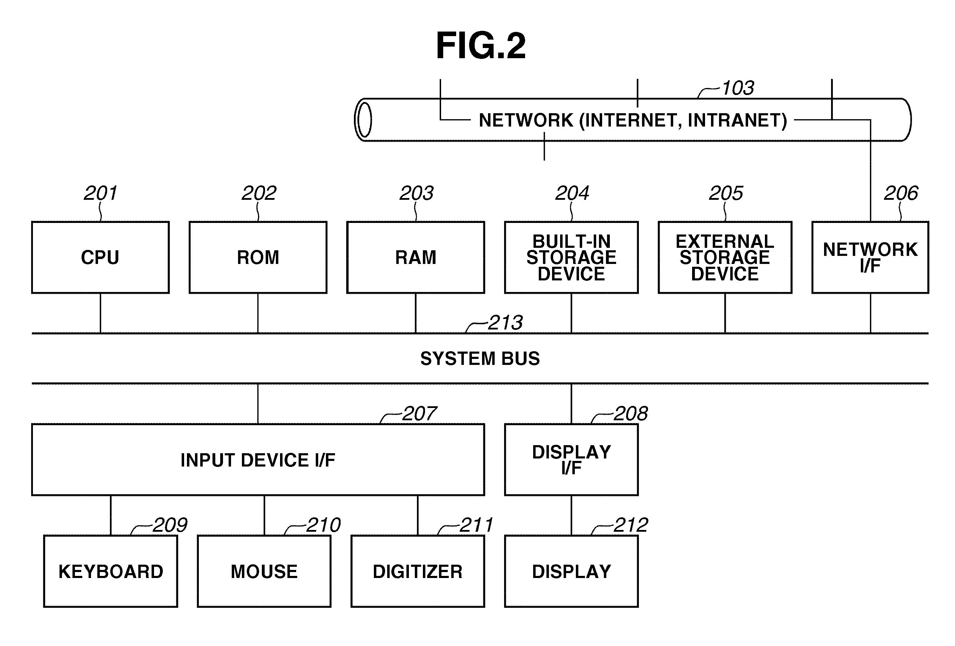

Fig. 2 illustrates an example internal arrangement of the teacher terminal device 101 illustrated in Fig. 1.

A central processing unit (CPU) 201 includes a function of performing integrated control for the teacher terminal device 101. For example, the CPU 201 controls an operation of each unit according to a program stored in a built-in storage device 204 (e.g., a processing program on an information distributing side).

A read-only memory (ROM) 202 is, for example, a programmable read only memory (PROM) that enables a user to electrically write a program or a mask ROM whose content is written in a manufacturing process. Any ROM can be used for the ROM 202 in the present exemplary embodiment. A random access memory (RAM) 203, i.e., a memory performing writing and reading data flexibly, includes a function of storing data temporarily.

The built-in storage device 204 functions as a storage unit configured to store various information in the teacher terminal device 101. For example, the built-in storage device 204 can be constituted by a hard disk. As described above, the built-in storage device 204 stores program(s) and setting information/data required for various operations of the teacher terminal device 101.

An external storage device 205 includes functions of reading and writing information from and to a medium different from the teacher terminal device 101. The external storage device 205 is, for example, a floppy disk (FD) drive, a magneto-optical disk (MO) drive, a compact disk re-writable (CD-RW) drive, a digital versatile disk re-writable (DVD-RW) drive, a memory stick, or a Blu-ray drive.

A network interface (I/F) 206 includes a function of performing communication control via a network (e.g. the Intranet 103). For example, the network I/F 206 can be constituted by a wireless Local Area Network (LAN) and a wired LAN. The network I/F 206 can be constituted by any other arrangement and can be appropriately modified according to user's environments. For example, the network I/F 206 may not be a network.

An input device I/F 207 includes a function of processing input information received from various input devices (e.g., a keyboard 209, a mouse 210, and a digitizer 211) . The input device I/F 207 can be configured to process any input information received from other input devices (e.g., input information received from a remote controller).

A display I/F 208 and a display 212 cooperatively function as a display unit which can be constituted by a cathode ray tube (CRT), a liquid crystal display, a plasma display, a surface-conduction electron-emitter display (SED), an organic electroluminescence (EL), a front projector and a rear projection television together with its control circuit. For example, the display 212 displays an operation status of the teacher terminal device 101 on its screen.

A system bus 213 includes functions of performing transmission/reception of various data between blocks in the teacher terminal device 101 and supplying electric power to various units in the teacher terminal device 101. For example, the system bus 213 is constituted by an address line, a data line, a control line, and a power source/ground line.

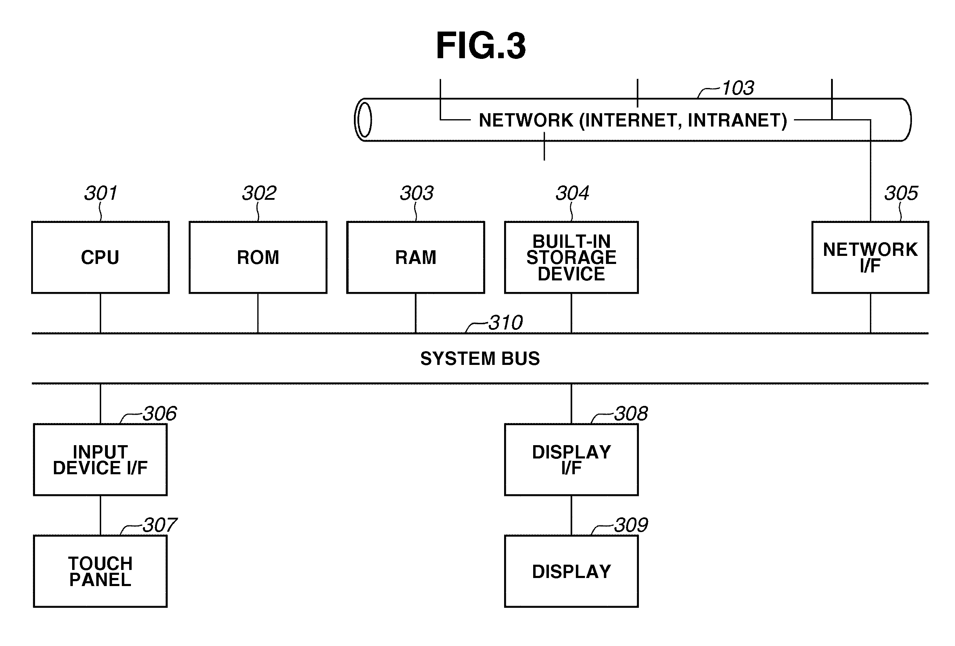

Fig. 3 illustrates an example internal arrangement of the student terminal device 102 illustrated in Fig. 1.

A CPU 301 includes a function of performing integrated control for the student terminal device 102. For example, the CPU 301 controls an operation of each unit according to a program stored in a built-in storage device 304 (e.g., a processing program on an information user side).

A ROM 302 is, for example, a PROM that enables a user to electrically write a program or a mask ROM whose content is written in a manufacturing process. Any ROM can be used for the ROM 302 in the present exemplary embodiment. A RAM 303, i.e., a memory performing writing and reading data flexibly, includes a function of storing data temporarily.

The built-in storage device 304 functions as a storage unit configured to store various information in the student terminal device 102. For example, the built-in storage device 304 can be constituted by a hard disk. As described above, the built-in storage device 304 stores program(s) and setting information/data required for various operations of the student terminal device 102.

A network I/F 305 includes a function of performing communication control via a network (e.g., Intranet). For example, the network I/F 305 can be constituted by a wireless LAN or a wired LAN. The network I/F 305 can be constituted by any other arrangement and can be appropriately modified according to user's environments. For example, the network I/F 305 may not be a network.

An input device I/F 306 includes a function of processing input information received from various input devices (e.g., a touch panel 307). The input device I/F 306 can be configured to process any input information received from other input devices (e.g., input information received from a mouse and a keyboard).

A display I/F 308 and a display 309 cooperatively function as a display unit which can be constituted by a CRT, a liquid crystal display, a surface-conduction electron emitter display (SED), and an organic electroluminescence (EL) together with its control circuit. For example, the display 212 displays an operation status of the student terminal device 102 on its screen.

A system bus 310 includes functions of performing transmission/reception of various data between blocks in the student terminal device 102 and supplying electric power to various units in the student terminal device 102. For example, the system bus 310 is constituted by an address line, a data line, a control line, and a power source/ground line.

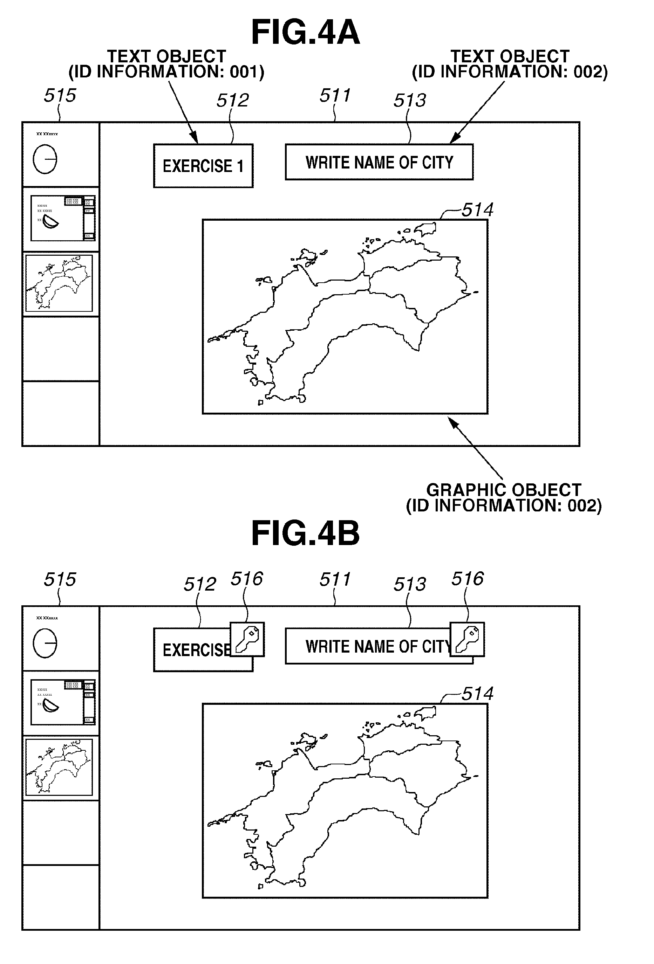

Figs. 4A and 4B illustrate example screen images, when the teacher terminal device 101 and the student terminal device 102 display the white board data.

The example screen image in Fig. 4A includes a white board data display area 511 which displays the white board data, and an operation area 515 which enables a user to perform page operation on the white board data displayed in the white board data display area 511. In this case, thumbnail images displayed in the operation area 515 correspond to respective pages constituting the white board data.

The system enables a teacher and one or more students to select an arbitrary thumbnail image to display the white board data of a corresponding page in the white board data display area 511. The white board data display area 511 includes display fields where various objects 512, 513, and 514 can be disposed and displayed. ID information is allocated to each object (512, 513, and 514) to uniquely identify individual objects.

In Fig. 4B, a lock icon 516 attached to text objects 512 and 513 indicates that these text objects 512 and 513 are locked. The student terminal device 102 does not allow a user (hereinafter a user of the student terminal device 102 is referred to as a student) to access (use) an object in a locked state, whereas the teacher terminal device 101 allows a user (hereinafter a user of the teacher terminal device 101 is referred to as a teacher) to access (use) the content of any object regardless of the locked state of each object. In other words, the teacher terminal device 101 performs the display of the lock icon for notifying the teacher of the lock state of each object.

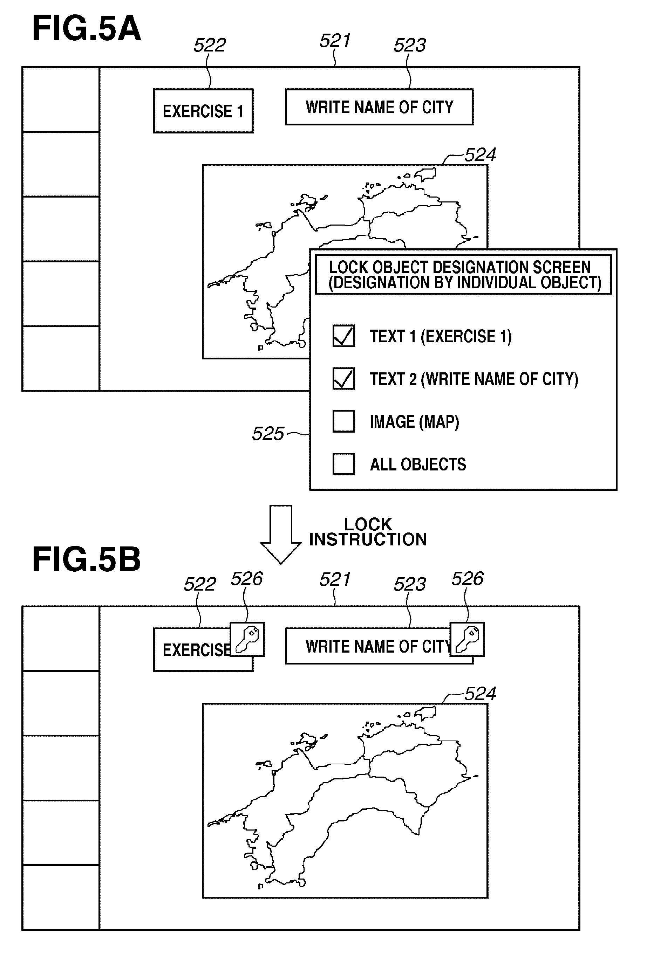

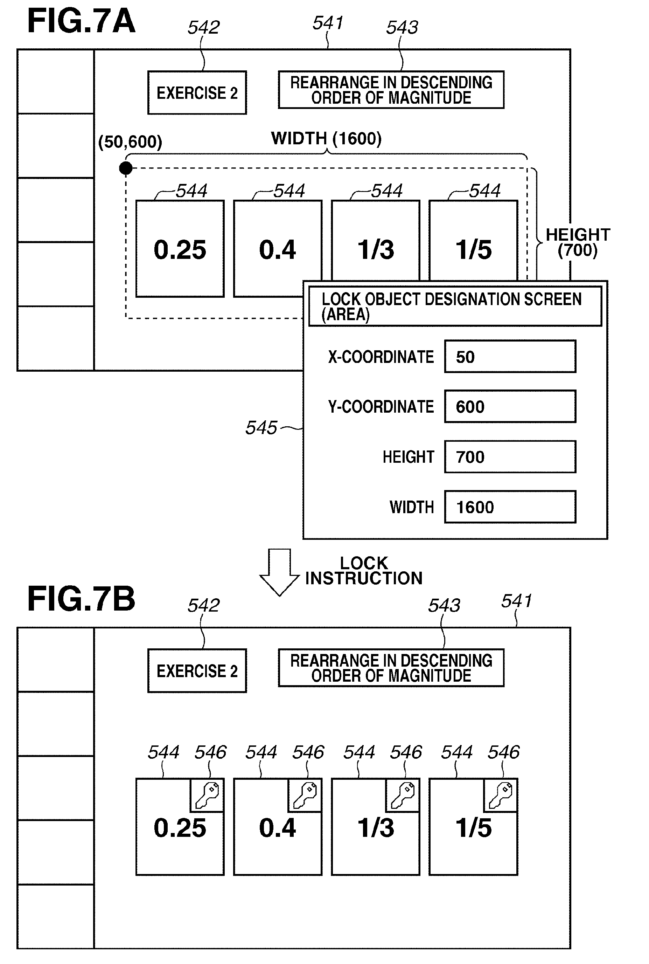

Some screen images used when and after lock processing is performed are described below with reference to Figs. 5A and 5B to Figs. 7A and 7B.

Figs. 5A and 5B illustrate example screen images displayed when the locking processing is performed individually for each object. Fig. 5A illustrates an example screen image displayed by the teacher terminal device 101, when the system enables the teacher to lock each object individually. Fig. 5B illustrates an example screen image displayed by the teacher terminal device 101 and the student terminal devices 102 which indicates a result of the lock processing performed based on the screen image illustrated in Fig. 5A.

The example screen image illustrated in Fig. 5A includes a white board data display area 521 which displays the white board data, text objects 522 and 523, and an image object 524. For example, when the system allows the teacher to perform the lock processing individually for each object, a pop-up screen 525 appears on the display unit to enable the teacher to select an operational restriction target (i.e., an object to be locked). The pop-up screen 525 includes a list of objects that are present on the display screen.

The teacher selects the object to be locked by checking a check box attached to an object name. One, two or more lock objects are selectable. The list includes a lowermost check box that enables the teacher to select all of the objects. If the lowermost check box is checked, each of the objects in the display screen is designated as a lock object. According to the example illustrated in Fig. 5A, both text 1 and text 2 are designated as the lock objects. The text 1 corresponds to the text object 522. The text 2 corresponds to the text object 523.

Fig. 5B illustrates an example screen image displayed in response to a lock instruction based on the above-described designation. In this case, a lock icon 526 is put on the text object 522 and the text object 523. Thus, these objects are in the locked state.

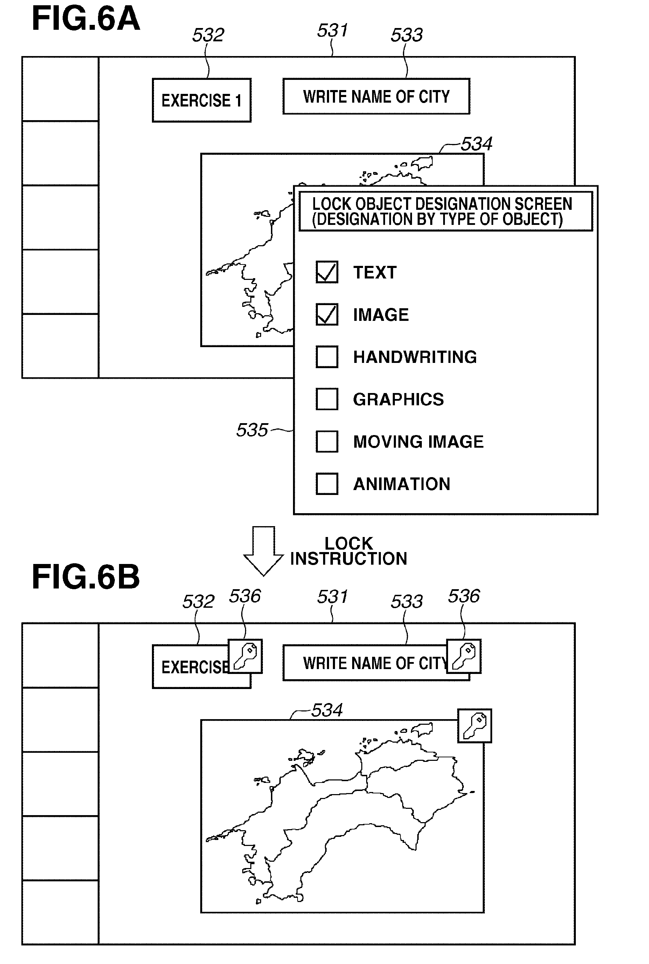

Figs. 6A and 6B illustrate example screen images, which enable the teacher to lock an object according to the type of object. Fig. 6A illustrates an example screen image displayed by the teacher terminal device 101, when the system allows the teacher to perform the lock processing according to the type of object. Fig. 6B illustrates an example screen image displayed by the teacher terminal device 101 and the student terminal devices 102 which indicates a result of the lock processing performed based on the screen image illustrated in Fig. 6A.

The example screen image illustrated in Fig. 6A includes a white board data display area 531 which displays the white board data, text objects 532 and 533, and an image object 534. For example, when the system allows the teacher to perform the lock processing according to the type of object, a pop-up screen 535 appears on the display unit to enable the teacher to select the type of object (i.e., an object to be locked). The pop-up screen 535 includes a list of object types. The teacher can select a desired object type as a lock object by checking a check box attached to each object type. One, two or more object types are selectable. According to the screen image illustrated in Fig. 6A, both text and image are designated as the lock object.

Fig. 6B illustrates an example screen image displayed in response to a lock instruction based on the above-described designation. In this case, a lock icon 536 is put on the text objects 532 and 533 and the image object 534. In other words, these objects are in the locked state.

Figs. 7A and 7B illustrate example screen images displayed when the lock processing is performed according to designation of area. Fig. 7A illustrates an example screen image displayed by the teacher terminal device 101, when the lock processing is performed according to the designation of area. Fig. 7B illustrates an example screen image displayed by the teacher terminal device 101 and the student terminal devices 102 which indicates a result of the lock processing performed based on the screen image illustrated in Fig. 7A.

The example screen image illustrated in Fig. 7A includes a white board data display area 541 which displays the white board data, text objects 542 and 543, and a plurality of image objects 544. For example, when the system allows the teacher to perform the lock processing according to the designation of area, a pop-up screen 545 appears on the display unit to enable the teacher to designate an area (i.e. an area having one or more objects to be locked).

The pop-up screen 545 includes a plurality of input boxes corresponding to X-coordinate, Y-coordinate, height, and width which enable the teacher to input desired values to designate a desired area to be locked in the display screen. In this case, as a result of the area selection performed based on area designation, the image objects 544 are designated as lock objects. Any object can be designated as the lock object, if at least part of the object is present in the designated area. Alternatively, only an object entirely within the designated area can be selected as the lock object.

Fig. 7B illustrates an example screen image displayed in response to a lock instruction based on the above-described designation. In this case, a lock icon 546 is put on each image object 544 to indicate that these objects are in the locked state.

Although not described, screen display performed for unlock processing is similar to the above-described screen display performed for lock processing. When unlock processing is performed, a pop-up screen similar to that described as an example screen image for lock processing appears on the display unit to enable the teacher to designate an object to be unlocked. If a locked object is unlocked, the lock icon attached to the object disappears from the display screen.

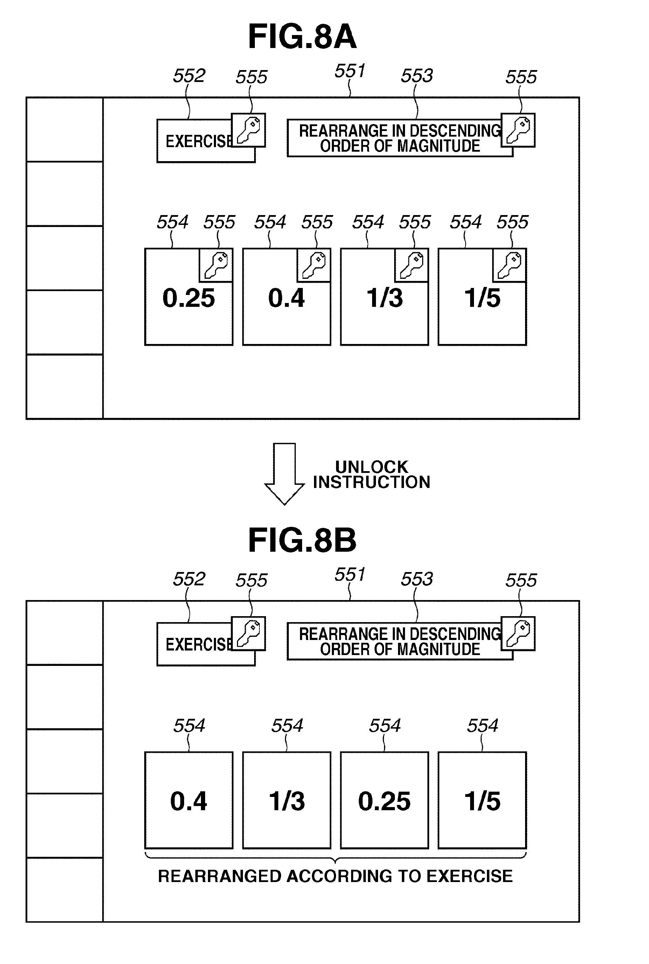

An example of unlock processing is described below with reference to Figs. 8A and 8B. It is now assumed that all objects in the display screen are locked as illustrated in Fig. 8A. The example screen image illustrated in Fig. 8A includes a white board data display area 551 which displays the white board data, text objects 552 and 553, and a plurality of image objects 554. Further, a lock icon 555 is put on each of the objects 552, 553, and 554 to indicate that these objects are in the locked state. In this state, if unlocking of image objects 554 is instructed, the student terminal device 102 unlocks each locked object as illustrated in Fig. 8B. Accordingly, the student can input an answer or reply to a given exercise. Any other suitable method can be used to designate the object to be unlocked.

For example, in the above-described user interfaces (including pop-up screens) illustrated in Figs. 5A and 5B to Figs. 7A and 7B, if an object is not designated as the lock object (i.e., if its check box is not checked), the object can be automatically designated as the object to be unlocked.

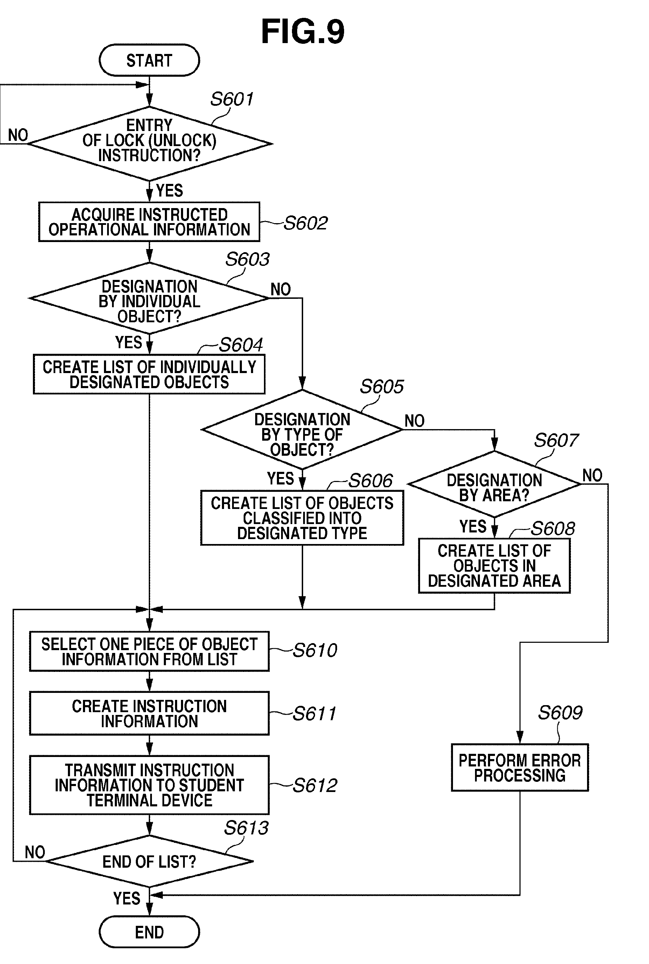

Fig. 9 is a flowchart illustrating example processing performed by the teacher terminal device 101 to transmit a lock instruction or an unlock instruction to the student terminal device 102. The CPU 201 executes a program, for example, loaded from the built-in storage device 204 to perform the following processing.

In step S601, the teacher terminal device 101 determines whether any lock (or unlock) instruction is input by a teacher. The teacher terminal device 101 is on standby when no instruction is input (NO in step S601). If the teacher terminal device 101 determines that the lock (or unlock) instruction is input by the teacher (YES in step S601), the processing proceeds to step S602.

In step S602, the teacher terminal device 101 acquires instructed operational information based on the user's instruction. The instructed operational information includes "instruction content information" and "operation target designation information." For example, the instruction content information includes information indicating a lock instruction or an unlock instruction. The operation target designation information includes information relating to an instruction identifying an object to be locked or unlocked, such as an instruction applied to an area, an instruction applied to an object type, and an instruction applied to an individual object.

After the teacher terminal device 101 acquired the instructed operational information in step S602, the processing proceeds to step S603. In step S603, the teacher terminal device 101 determines whether the acquired information includes the instruction applied to the individual object (i.e., an instruction individually designated to each object). If the teacher terminal device 101 determines that the acquired information includes the lock (or unlock) instruction applied to the individual object (YES in step S603), the processing proceeds to step S604. In step S604, the teacher terminal device 101 creates a list of information relating to one or more objects individually instructed by the teacher's operation.

If the determination result is NO in step S603, the processing proceeds to step S605. In step S605, the teacher terminal device 101 determines whether the acquired information includes the instruction applied to the object type (i.e., an instruction designating the type of object (e.g., text, image, handwriting, graphics, moving image, and animation)). If the teacher terminal device 101 determines that the acquired information includes the instruction applied to the object type (YES in step S605), the processing proceeds to step S606. In step S606, the teacher terminal device 101 creates a list of information relating to objects classified into the instructed type.

If the determination result is NO in step S605, the processing proceeds to step S607. In step S607, the teacher terminal device 101 determines whether the acquired information includes the instruction applied to a designated area, i.e., an instruction applied to an object involved in a designated area. If the teacher terminal device 101 determines that the acquired information includes the instruction applied to the designated area (YES in step S607), the processing proceeds to step S608. In step S608, the teacher terminal device 101 creates a list of information relating to the objects involved in the designated area. If the determination result is NO in step S607, the processing proceeds to step S609. In step S609, the teacher terminal device 101 performs error processing. Then, the teacher terminal device 101 terminates the processing of this routine.

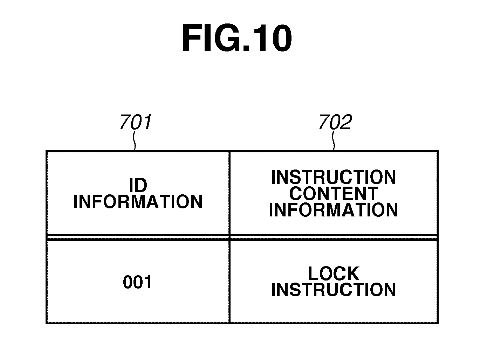

After completing creation of the list through the above-described processing, the processing proceeds to step S610. In step S610, the teacher terminal device 101 selects one piece of object information from the lists and deletes the selected object information from the list. In step S611, the teacher terminal device 101 creates instruction information. For example, as illustrated in Fig. 10, the instruction information includes ID information 701 and instruction content information 702. As described above, the ID information 701 is information identifying the object to be locked or unlocked which can be extracted from the object information in step S610. As described above, the instruction content information 702 is information indicating the lock instruction or the unlock instruction which can be acquired in step S602.

In step S612, the teacher terminal device 101 transmits the created instruction information to a plurality of the student terminal devices 102. The teacher terminal device 101 repetitively executes the processing of steps S610 to S612 if any object information remains in the lists (NO in step S613). If there is not any object information remaining in the lists (YES in step S613), the teacher terminal device 101 terminates the processing of this routine.

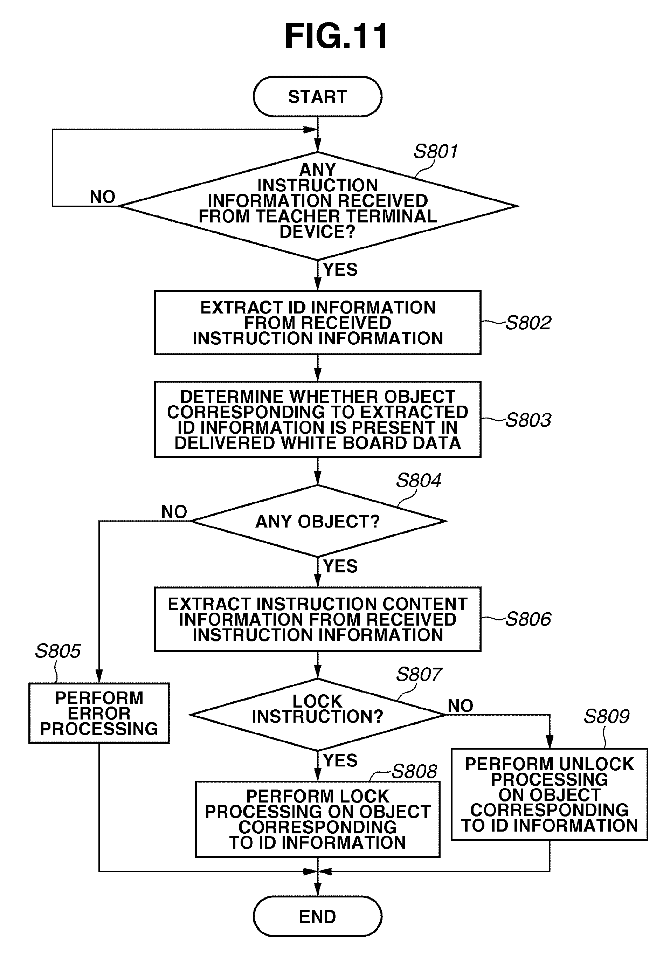

Fig. 11 is a flowchart illustrating example processing performed by the student terminal device 102 when the lock instruction or the unlock instruction is received from the teacher terminal device 101. To simplify the following description, it is now assumed that the student terminal device 102 has already received the white board data from the teacher terminal device 101. The CPU 301 executes a program loaded, for example, from the built-in storage device 304 to perform the following processing.

In step S801, the student terminal device 102 determines whether any instruction information is received from the teacher terminal device 101. The student terminal device 102 is on standby when no instruction is input (NO in step S801) . If the student terminal device 102 receives the instruction information (which is transmitted in step S611 of Fig. 9) (YES in step S801), the processing proceeds to step S802. In step S802, the student terminal device 102 extracts ID information identifying an object from the instruction information. In step S803, the student terminal device 102 determines whether an object corresponding to the extracted ID information is present in the white board data (delivery data) transmitted from the teacher terminal device 101.

If the student terminal device 102 determines that the object corresponding to the ID information is not present (NO in step S804), the processing proceeds to step S805. In step S805, the student terminal device 102 performs error processing. Then, the student terminal device 102 terminates the processing of this routine. If the object corresponding to the ID information is present (YES in step S804), the processing proceeds to step S806. In step S806, the student terminal device 102 extracts instruction content information from the instruction information received in step S801.

If the instruction content information includes the lock instruction (YES in step S807), the processing proceeds to step S808. In step S808, the student terminal device 102 performs the lock processing on an object on the white board which corresponds to the ID information extracted in step S802. Then, the student terminal device 102 terminates the processing of this routine. If the instruction content information includes the unlock instruction (NO in step S807), the processing proceeds to step S809. In step S809, the student terminal device 102 performs the unlock processing on an object on the white board which corresponds to the ID information extracted in step S802. Then, the student terminal device 102 terminates the processing of this routine.

The foregoing is a description of the processing performed by the teacher terminal device 101 to the student terminal devices 102. In the above description, the lock (or unlock) processing is performed for each object. However, the lock (or unlock) processing can be performed according to the attribute of an object, i.e., according to an operation applied to the attribute of an object.

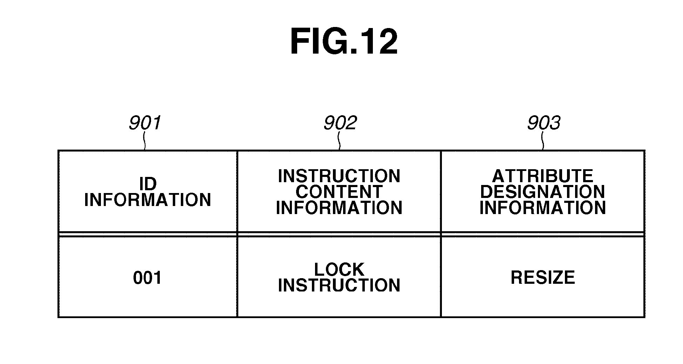

Fig. 12 illustrates example instruction information transmitted from the teacher terminal device 101 to the student terminal device 102 which includes attribute designation information 903 in addition to the items illustrated in Fig. 10. The attribute designation information 903 can designate an operational attribute to be restricted, e.g., "move" or "resize" of an object, or "change" of color. According to the example illustrated in Fig. 12, the attribute designation information 903 designates "resize." Therefore, the student terminal device 102 locks a resizing function of an object identified by ID information: 001.

In the above description, the teacher terminal device 101 creates the instruction information based on input lock (unlock) instruction and transmits the created instruction information (see steps S603 to S611 in Fig. 9). Alternatively, the student terminal device 102 can create information corresponding to the instruction information. In other words, the teacher terminal device 101 can directly transmit any information entered by the teacher, as instruction information, to the student terminal device 102. The student terminal device 102 can perform processing corresponding to the above-described steps S603 to S611 in Fig. 9.

Further, instead of performing the lock (or unlock) processing on an object in the white board data received from the teacher terminal device 101 as described above, the lock (or unlock) processing can be performed on delivery data received from any other apparatus.

### Second Exemplary Embodiment

In contrast to the above-described first exemplary embodiment that performs the lock (or unlock) processing on an individual object, a second exemplary embodiment is characterized by performing the lock (unlock) processing on a page-by-page basis. A teaching system according to the second exemplary embodiment has a configuration similar to that of the teaching system described in the first exemplary embodiment, so that the description thereof is not repeated. Features different from those of the first exemplary embodiment are described below. In the second exemplary embodiment, a page attribute is set to each page involved in the white board data.

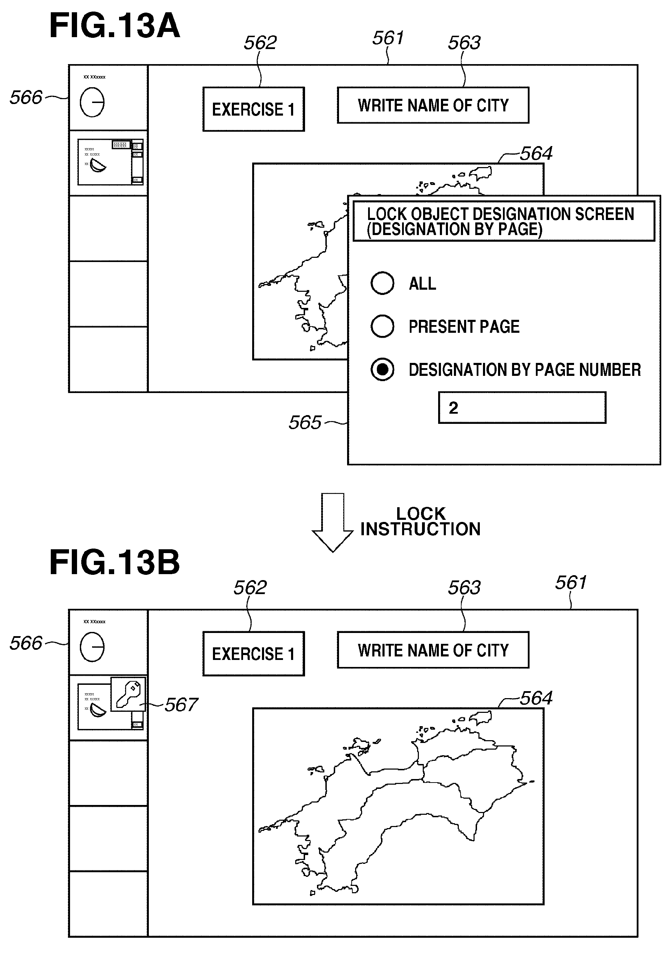

Figs. 13A and 13B illustrate example screen images displayed when the lock processing is performed on a page-by-page basis. Fig. 13A illustrates an example screen image displayed on the teacher terminal device 101 when the lock processing is performed on the page-by-page basis. Fig. 13B illustrates an example screen image displayed on the teacher terminal device 101 and the student terminal device 102 which indicates a result of the lock processing performed based on the screen image illustrated in Fig. 13A.

The screen image in Fig. 13A includes a white board data display area 561 which displays the white board data, and an operation area 566 which enables the teacher to perform page operation on the white board data displayed in the white board data display area 561. For example, when the system allows the teacher to perform the lock processing on a page-by-page basis, a pop-up screen 565 appears on the display unit to enable the teacher to select a page (i.e. an object to be locked).

The pop-up screen 565 includes three radio buttons, which enable the teacher to select all pages or present page, or designate a page number. The pop-up screen 565 further includes a text box to enable the teacher to input desired page number(s) when the teacher checks the radio button corresponding to the option "designation by page number." According to the example illustrated in Fig. 13A, the second page is selected as the lock object.

Fig. 13B illustrates the example screen image displayed in response to the lock instruction based on the above-described designation. In this case, in the operation area 566, a lock icon 567 is put on the display of the second page to indicate that the second page is in the locked state.

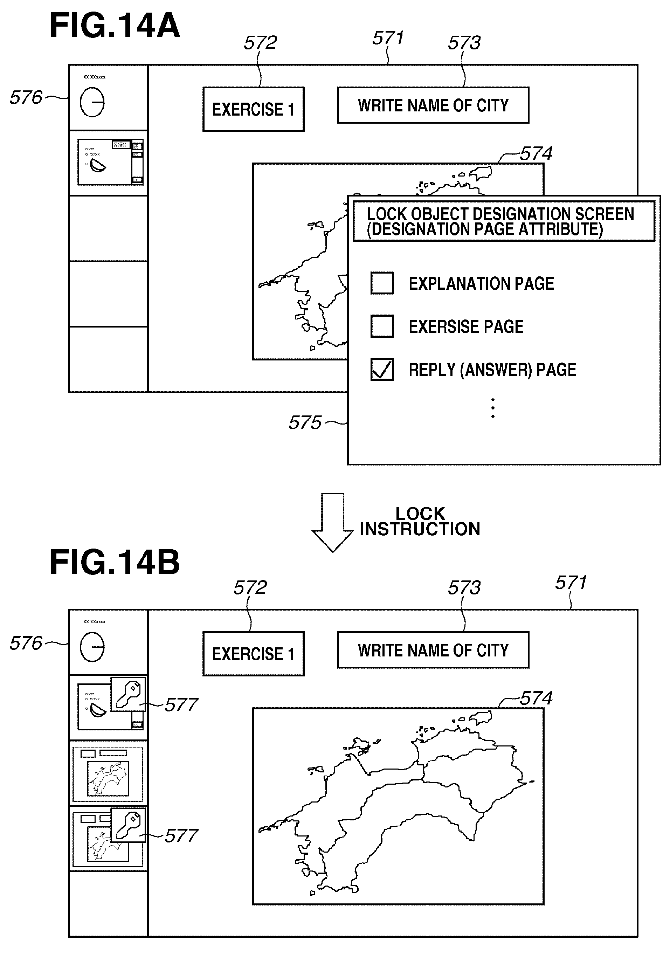

Figs. 14A and 14B illustrate example screen images displayed when the lock processing is performed according to the attribute of a page. Fig. 14A illustrates an example screen image displayed by the teacher terminal device 101 when the lock processing is performed according to the attribute of a page. Fig. 14B illustrates an example screen image displayed on the teacher terminal device 101 and the student terminal devices 102 which indicates a result of the lock processing performed based on the screen image illustrated in Fig. 14A.

The screen image illustrated in Fig. 14A includes a white board data display area 571 which displays the white board data, and an operation area 576 which enables the teacher to perform the page operation on the white board data displayed in the white board data display area 571. For example, when the system allows the teacher to perform the lock processing according to the attribute of a page, a pop-up screen 575 appears on the display unit to enable the teacher to select the page attribute (i.e., an object to be locked). The pop-up screen 575 includes three check boxes which enable the teacher to select "explanation page", "exercise page", or "reply (answer) page" as the page attribute to be locked. According to the example illustrated in Fig. 14A, "reply (answer) page" is selected as the page attribute to be locked.

Fig. 14B illustrates the example screen image displayed in response to the lock instruction based on the above-described designation. In the operation area 576, a lock icon 577 is put on the display of the second and fourth pages to indicate that these pages are in the locked state. In other words, the page attribute of the second and fourth pages is "reply (answer) page." Therefore, these pages are in the locked state.

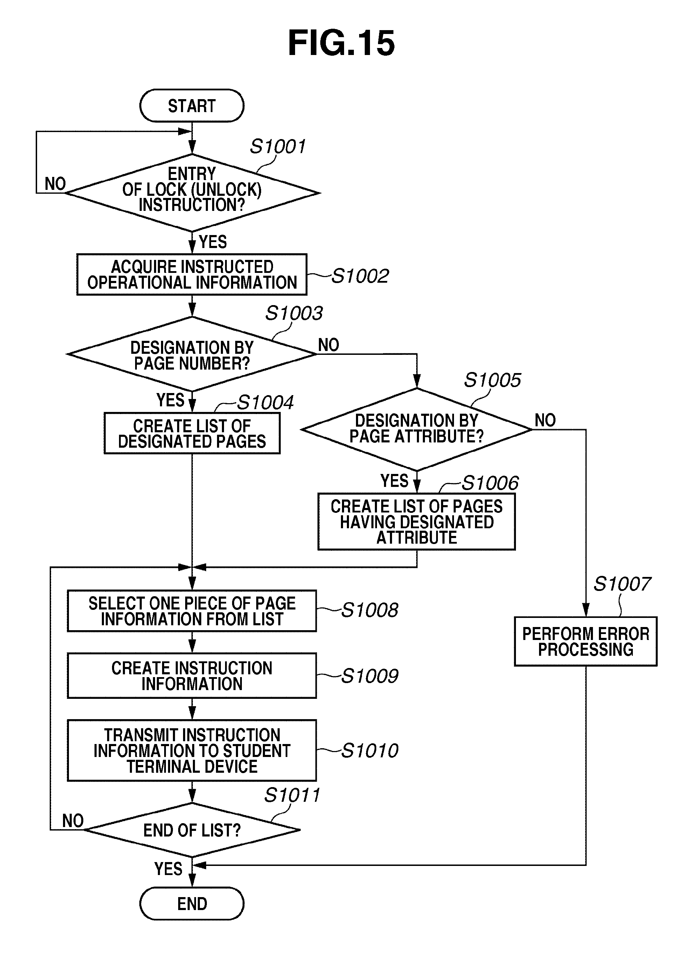

Fig. 15 is a flowchart illustrating example processing performed by the teacher terminal device 101, to transmit the lock (or unlock) instruction to the student terminal device 102 on the page-by-page basis. The CPU 201 executes a program loaded, for example, from the built-in storage device 204 to perform the following processing.

In step S1001, the teacher terminal device 101 determines whether any lock (or unlock) instruction is input by the teacher. The teacher terminal device 101 is on standby when no instruction is input (NO in step S1001). If the teacher terminal device 101 determines that a lock (or unlock) instruction is input by the teacher (YES in step S1001), the processing proceeds to step S1002. In step S1002, the teacher terminal device 101 acquires the instructed operational information based on the teacher's operation.

The instructed operational information includes "instruction content information" and "operation target designation information." For example, the instruction content information includes information indicating the lock instruction or the unlock instruction. The operation target designation information includes information relating to an instruction identifying a page to be locked or unlocked, such as an instruction applied to a page number, and an instruction applied to the page attribute.

After completing acquisition of the instructed operational information in step S1002, the processing proceeds to step S1003. In step S1003, the teacher terminal device 101 determines whether the acquired information includes an instruction designated by the page number (i.e., an instruction including page number (s), e.g. all pages, present page, or page number, to be locked.) If the teacher terminal device 101 determines that the acquired information includes the lock (or unlock) instruction designated by the page number (YES in step S1003), the processing proceeds to step S1004. In step S1004, the teacher terminal device 101 creates a list of information relating to one or more pages instructed by the teacher's operation.

If the determination result is NO in step S1003, the processing proceeds to step S1005. In step S1005, the teacher terminal device 101 determines whether the acquired information includes an instruction designated by the page attribute, i.e., an instruction including the page attribute (e.g., explanation page, exercise page, or reply (answer) page). If the teacher terminal device 101 determines that the acquired information includes an instruction designated by a page attribute (YES in step S1005), the processing proceeds to step S1006. In step S1006, the teacher terminal device 101 creates a list of information relating to pages instructed according to the designated page attribute. If the determination result is NO in step S1005, the processing proceeds to step S1007. In step S1007, the teacher terminal device 101 performs error processing. Then, the teacher terminal device 101 terminates the processing of this routine.

After completing creation of the list through the above-described processing, the processing proceeds to step S1008. In step S1008, the teacher terminal device 101 selects one piece of page information from the lists and deletes the selected page information from the list. In step S1009, the teacher terminal device 101 creates instruction information. For example, the instruction information has a configuration similar to that illustrated in Fig. 10. However, the ID information corresponds to a page, not an object. The ID information is information identifying a page to be locked or unlocked which can be extracted from the page information in step S1008. The instruction content information 702 is information indicating the lock instruction or the unlock instruction which can be acquired in step S1002.

In step S1010, the teacher terminal device 101 transmits the created instruction information to the plurality of the student terminal devices 102. The teacher terminal device 101 repetitively executes the processing of steps S1008 to S1010 if any page information remains in the lists (NO in step S1011). If there is no page information remaining in the lists (YES in step S1011), the teacher terminal device 101 terminates the processing of this routine.

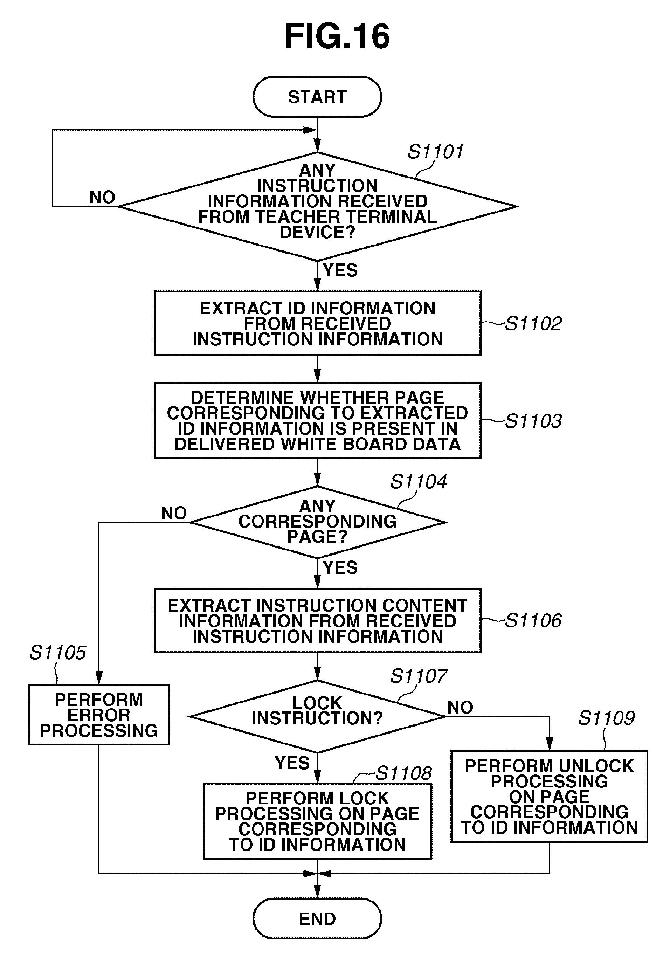

Fig. 16 is a flowchart illustrating example processing performed by the student terminal device 102 when the lock (or unlock) instruction is received from the teacher terminal device 101 on a page-by-page basis. To simplify the following description, it is now assumed that the student terminal device 102 has already received the white board data from the teacher terminal device 101. The CPU 301 executes a program loaded, for example, from the built-in storage device 304 to perform the following processing.

In step S1101, the student terminal device 102 determines whether any instruction information is received from the teacher terminal device 101. The student terminal device 102 is on standby when no instruction is input (NO in step S1101). If the student terminal device 102 determines that instruction information is received from the teacher terminal device 101 (YES in step S1101), the processing proceeds to step S1102. In step S1102, the student terminal device 102 extracts ID information identifying a page form the instruction information. In step S1103, the student terminal device 102 determines whether a page corresponding to the extracted ID information is present in the white board data (delivery data) transmitted from the teacher terminal device 101.

If the student terminal device 102 determines that the page corresponding to the ID information is not present (NO in step S1104), the processing proceeds to step S1105. In step S1105, the student terminal device 102 performs error processing. Then, the student terminal device 102 terminates the processing of this routine. If the student terminal device 102 determines that the page corresponding to the ID information is present (YES in step S1104), the processing proceeds to step S1106. In step S1106, the student terminal device 102 extracts instruction content information from the instruction information received in step S1101.

If the student terminal device 102 determines that the instruction content information includes the lock instruction (YES in step S1107), the processing proceeds to step S1108. In step S1108, the student terminal device 102 performs the lock processing on a page corresponding to the ID information extracted in step S1102. Then, the student terminal device 102 terminates the processing of this routine. If the student terminal device 102 determines that the instruction content information includes the unlock instruction (NO in step S1107), the processing proceeds to step S1109. In step S1109, the student terminal device 102 performs the unlock processing on a page corresponding to the ID information extracted in step S1102. Then, the student terminal device 102 terminates the processing of this routine.

In the above description, the teacher terminal device 101 creates the instruction information based on input lock (unlock) instruction and transmits the created instruction information (see steps S1003 to S1009 in Fig. 15). Alternatively, the student terminal device 102 can create information corresponding to the instruction information. In other words, the teacher terminal device 101 can directly transmit any information entered by the teacher, as instruction information, to the student terminal device 102. The student terminal device 102 can perform processing corresponding to the above-described steps S1003 to S1009 in Fig. 15.

Further, instead of performing the lock (or unlock) processing on a page in the white board data received from the teacher terminal device 101 as described above, the lock (or unlock) processing can be performed on delivery data received from any other apparatus.

### Third Exemplary Embodiment

In contrast to the above-described first and second exemplary embodiments that perform real-time lock (unlock) processing, a third exemplary embodiment is characterized by performing the lock processing prior to delivery of the white board data (pre-delivery restriction processing). A teaching system according to the third exemplary embodiment has a configuration similar to that of the teaching system described in the first exemplary embodiment, so that the description thereof is not repeated. Features different from those of the first exemplary embodiment are described below. In the third exemplary embodiment, the lock processing is performed on each object. Similarly, page-by-page basis lock processing can be performed.

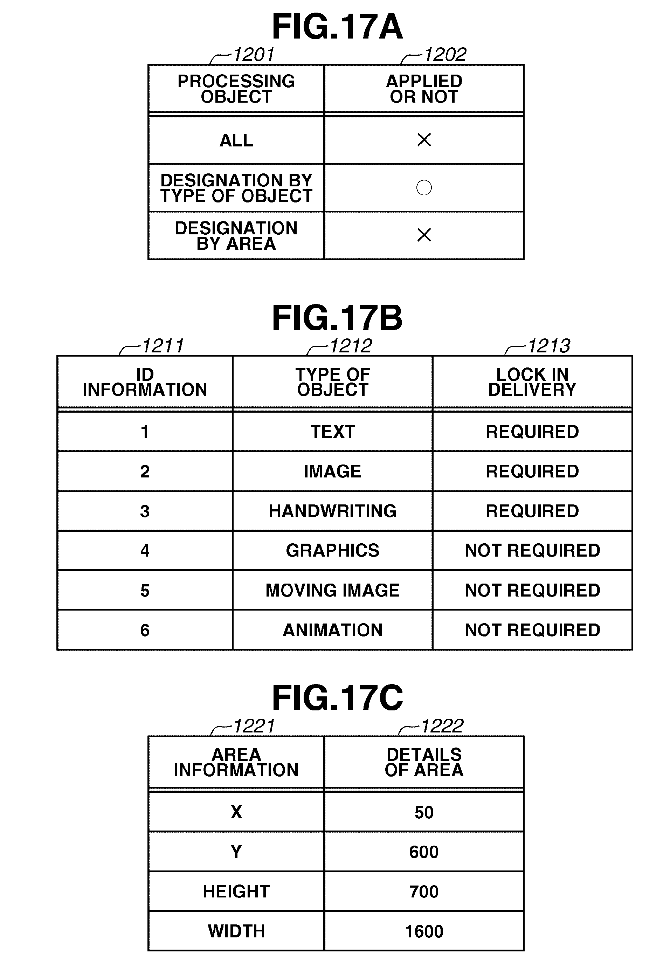

Figs. 17A to 17C illustrate example lock setting information which can be set beforehand when the lock processing is performed on the white board data prior to delivery of the white board data. For example, the system allows a user to set the lock setting information using the user interfaces described with reference to Figs. 5A and 5B to Figs. 7A and 7B.

Fig. 17A illustrates information relating to an object (i.e., processing object 1201) to be subjected to the lock processing or not (see 1202) prior to delivery of the white board data. According to the example illustrated in Fig. 17A, "object type designation" is designated as the object to be subjected to the lock processing.

Fig. 17B illustrates information (ID information 1211) relating to the type of object (name of object type) 1212 to be subjected to the lock processing or not (see 1213) prior to delivery of the white board data, when the lock processing is performed according to the type of object. According to the example illustrated in Fig. 17B, "text", "image", and "handwriting" are designated as the objects to be subjected to the lock processing.

Fig. 17C illustrates information relating to an area (area information 1221) to be subjected to the lock processing, when the lock processing is performed according to the designation of area. The area information 1221 includes X- and Y-coordinate values and width/height values which identify an area. Detailed values (see 1222) corresponding to area information 1221 are expressed in units of dots.

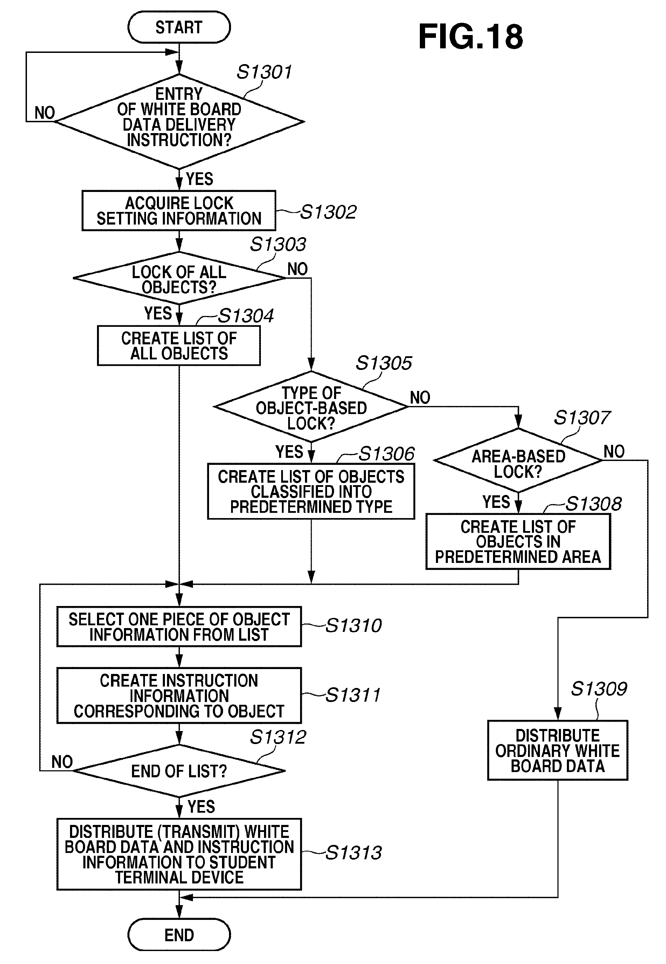

Fig. 18 is a flowchart illustrating example processing performed by the teacher terminal device 101 to execute the lock processing prior to delivery of the white board data. To simplify the following description, it is now assumed that the teacher terminal device 101 has already set the lock setting information illustrated in Figs. 17A to 17C. The CPU 201 executes a program loaded, for example, from the built-in storage device 204 to perform the following processing.

In step S1301, the teacher terminal device 101 determines whether any white board data delivery instruction is input by a teacher. The teacher terminal device 101 is on standby when no instruction is input (NO in step S1301). If the teacher terminal device 101 determines that the white board data delivery instruction is input by the teacher (YES in step S1301), the processing proceeds to step S1302. In step S1302, the teacher terminal device 101 acquires the lock setting information which has been set beforehand. Namely, the teacher terminal device 101 acquires the information described with reference to Figs. 17A to 17C.

After completing acquisition of the lock setting information in step S1302, the processing proceeds to step S1303. In step S1303, the teacher terminal device 101 determines whether the acquired information indicates that the lock processing is to be performed on all objects. If the teacher terminal device 101 determines that the acquired information indicates the lock processing is to be performed on all objects (YES in step S1303), the processing proceeds to step S1304. In step S1304, the teacher terminal device 101 creates a list of information relating to all objects in the white board data which are to be delivered.

If the determination result is NO in step S1303, the processing proceeds to step S1305. In step S1305, the teacher terminal device 101 determines whether the lock setting information indicates the lock processing is to be performed according to the type of object (e.g., text, image, handwriting, graphics, moving image, and animation). If the teacher terminal device 101 determines that the lock setting information indicates the lock processing is to be performed according to the type of object (YES in step S1305), the processing proceeds to step S1306. In step S1306, the teacher terminal device 101 creates a list of information relating to objects classified into a predetermined type in the white board data to be delivered. In other words, the teacher terminal device 101 creates a list of lock objects according to the object type with reference to the information illustrated in Fig. 17B.

If the determination result is NO in step S1305, the processing proceeds to step S1307. In step S1307, the teacher terminal device 101 determines whether the lock setting information indicates the lock processing is to be performed according to the designation of area. If the teacher terminal device 101 determines that the lock setting information indicates the lock processing is to be performed according to the designation of area (YES in step S1307), the processing proceeds to step S1308.

In step S1308, the teacher terminal device 101 creates a list of information relating to objects in a predetermined area in the white board data to be delivered. In other words, the teacher terminal device 101 creates a list of lock objects according to the object area with reference to the information illustrated in Fig. 17C. If the determination result is NO in step S1307, the processing proceeds to step S1309. In step S1309, the teacher terminal device 101 distributes ordinary white board data. Then, the teacher terminal device 101 terminates the processing of this routine.

After completing creation of the list through the above-described processing, the processing proceeds to step S1310. In step S1310, the teacher terminal device 101 selects one piece of object information from the lists and deletes the selected object information from the list. In step S1311, the teacher terminal device 101 creates instruction information of an object corresponding to the selected object information. The instruction information has a configuration similar to that of the above-described first exemplary embodiment illustrated in Fig. 10 which includes ID information and instruction content information.

The teacher terminal device 101 repetitively executes the processing of steps S1310 and S1311 if any object information remains in the list (NO in step S1312). If there is not any object information remaining in the list (YES in step S1312), the processing proceeds to step S1313. In step S1313, the teacher terminal device 101 distributes (transmits) the created one or more pieces of instruction information together with the white board data to the plurality of the student terminal devices 102. Then, the teacher terminal device 101 terminates the processing of this routine.

The student terminal device 102 according to the third exemplary embodiment performs processing similar to that illustrated in Fig. 11 described in the first exemplary embodiment. More specifically, the student terminal device 102 receives the white board data and instruction information and performs the lock processing on an object in the white board data based on the instruction information.

The foregoing is the description for the processing performed by the teaching system according to the third exemplary embodiment. The teaching system according to the third exemplary embodiment automatically performs the lock processing on objects with reference to the settings registered beforehand prior to delivery of the white board data. Therefore, the third exemplary embodiment enables a teacher to skip the lock processing which was manually performed before delivering the white board data. Thus, usability can be improved.

As described above, according to the first to third exemplary embodiments, the teaching system can prohibit a student from starting replying to the white board data delivered from the teacher terminal device 101 without any permission from a teacher, for example, in the situation where the student needs to pay attention to the teacher.

Further, the teaching system enables a teacher to accurately and fairly manage the start/end time to reply to an exercise for all students.

An embodiment of the present invention provides an information processing system including a plurality of information processing apparatuses that can share data for display, wherein the plurality of information processing apparatuses include a first information processing apparatus (101) and a second information processing apparatus (102). The first information processing apparatus includes first transmission means configured to transmit data to the second information processing apparatus configured to display the data, input means configured to input an operational restriction applied to an object expressed on the displayed data transmitted by the first transmission means, creation means configured to create instruction information based on the operational restriction input by the input means, and second transmission means configured to transmit the instruction information created by the creation means to the second information processing apparatus. The second information processing apparatus includes reception means configured to receive the instruction information transmitted from said second transmission means, and restriction means configured to apply the operational restriction to the object on the transmitted data based on the instruction information received by the reception means.

In this embodiment, the first transmission means, input means, creation means, and second transmission means are all provided by CPU 201. The reception means and restriction means are provided by CPU 301.

For example, the present invention can be embodied by a system, an apparatus, a method, a program or a storage medium. More specifically, the present invention can be applied to a system including two or more devices or to a single device.

Further, software program code for realizing the functions of the above-described exemplary embodiments can be directly or remotely supplied to a system or an apparatus including various devices. Accordingly, the present invention encompasses the program code installable on a computer in the system or the apparatus when the computer can realize the functions of the above-described exemplary embodiments by reading and executing the supplied software program code. The supplied program code is a computer installable program including processing corresponding to the flowcharts in the exemplary embodiments.

Thus, the program code itself can realize the functions of the exemplary embodiments. Further, the present invention encompasses the program code with any form, such as object code, interpreter program, and operating system (OS) script data, as long as it has comparable functions.

A computer readable storage medium supplying the program can be selected from any one of a floppy disk, a hard disk, an optical disk, a magneto-optical (MO) disk, a compact disc-ROM (CD-ROM), a CD-recordable (CD-R), a CD-rewritable (CD-RW), a magnetic tape, a nonvolatile memory card, a ROM, and a DVD (DVD-ROM, DVD-R).

The method for supplying the program includes accessing a web site on the Internet using the browsing function of a client computer, when the web site allows each user to download the computer program of the exemplary embodiments of the present invention, or compressed files of the programs having automatic installing functions, to a hard disk or other recording medium of the user. Further, the program code constituting the programs of the exemplary embodiments of the present invention is dividable into a plurality of files so that respective files are downloadable from different web sites. Namely, the present invention encompasses World Wide Web (WWW) servers that allow numerous users to download the program files so that their computers can realize the functions or processes of the exemplary embodiments of the present invention.

The programs of the exemplary embodiments of the present invention can be distributed to users by enciphering the programs and storing the enciphered programs on a CD-ROM or comparable storing medium. Authorized users (i.e., users satisfying predetermined conditions) are allowed to download key information from a page on the Internet. The users can decipher the programs with the obtained key information and can install the programs on their computers.

When the computer reads and executes the installed programs, the computer can realize the functions of the above-described exemplary embodiments. Moreover, an OS or other application software running on the computer can execute part or all of actual processing based on instructions of the programs and realize the functions of the above-described exemplary embodiments.

Additionally, the program code read out of a storage medium can be written into a memory of a function expansion board equipped in a computer or into a memory of a function expansion unit connected to the computer. In this case, based on instructions of the program, a CPU provided on the function expansion board or the function expansion unit can execute part or all of the processing to realize the functions of the above-described exemplary embodiments.

While the present invention has been described with reference to exemplary embodiments, it is to be understood that the invention is not limited to the disclosed exemplary embodiments. The scope of the following claims is to be accorded the broadest interpretation so as to encompass all equivalent structures and functions.

## Claims

1. An information processing system including a plurality of information processing apparatuses that can share data for display, wherein the plurality of information processing apparatuses include a first information processing apparatus (101) and a second information processing apparatus (102),
the first information processing apparatus comprising:
first transmission means (201) configured to transmit data to the second information processing apparatus configured to display the data;
input means (201) configured to input an operational restriction applied to an object expressed on the displayed data transmitted by the first transmission means;
creation means (201) configured to create instruction information based on the operational restriction input by the input means; and
second transmission means (201) configured to transmit the instruction information created by the creation means to the second information processing apparatus,
the second information processing apparatus comprising:
reception means (301) configured to receive the instruction information transmitted from said second transmission means; and
restriction means (301) configured to apply the operational restriction to the object on the transmitted data based on the instruction information received by the reception means.

2. The information processing system according to claim 1, wherein the target to be subjected to the operational restriction is an object constituting a page of the displayed data, wherein the restriction means is operable to restrict an operation of the display of data for each object based on the instruction information received from the second transmission means.

3. The information processing system according to claim 1 or 2, wherein the input means is configured to receive a user instruction that designates the operation target to be subjected to the operational restriction according to one of the following methods: a method for individually designating an object to be subjected to the operational restriction; a method for designating an object type to be subjected to the operational restriction; a method for designating an area in a display screen that displays the display data; and a method for designating all objects.

4. The information processing system according to any preceding claim, wherein an operation target to be subjected to the operational restriction is an attribute of an object constituting a page of the display data, wherein the restriction means is operable to restrict an operation of the display data according to the attribute of the object based on the instruction information transmitted from the second transmission means.

5. The information processing system according to any one of claims 1 to 3, wherein the target to be subjected to the operational restriction is a page of the display data, wherein the restriction means is operable to restrict an operation of the display data on a page-by-page basis based on the instruction information transmitted from the second transmission means.

6. The information processing system according to claim 5, wherein the input means is configured to receive a user instruction that designates the target to be subjected to the operational restriction according to one of the following methods: a method for individually designating a page; a method for designating a page attribute; and a method for designating all pages.

7. A method for controlling an information processing system including a plurality of information processing apparatuses that can share data for display, wherein the plurality of information processing apparatuses include a first information processing apparatus and a second information processing apparatus, the method comprising:
transmitting data from the first information processing apparatus to the second information processing apparatus which is configured to display the data;
inputting an operational restriction applied to an object expressed on the transmitted data;
creating instruction information based on the input operational restriction;
transmitting the created instruction information from the first information processing apparatus to the second information processing apparatus;
receiving the instruction information, transmitted from the first transmission means, by the second information processing apparatus; and
applying the operational restriction to the object on the transmitted data based on the received instruction information.

8. An information processing apparatus (101) configured to remotely control a second information processing apparatus (102) connected via a network, the information processing apparatus comprising:
input means configured to input an operational restriction applied to an object expressed on data displayed under control of the second information processing apparatus;
creation means configured to create instruction information based on the operational restriction input by the input means; and
transmission means configured to transmit the instruction information created by the creation means to the second information processing apparatus.

9. An information processing apparatus (102) configured to be remotely controlled by a first information processing apparatus (101) connected via a network, the information processing apparatus comprising:
display means (309) configured to display data;
reception means configured to receive instruction information based on an operational restriction applied to an object expressed on the data which is generated by the first information processing apparatus; and
restriction means configured to apply the operational restriction to the object on the data displayed based on the instruction information received by the reception means.

10. A method for controlling an information processing apparatus configured to remotely control a second information processing apparatus connected via a network, the method comprising:
inputting an operational restriction applied to an object expressed on data displayed under control of the second information processing apparatus;
creating instruction information based on the input operational restriction; and
transmitting the created instruction information to the second information processing apparatus.

11. A method for controlling an information processing apparatus configured to be remotely controlled by a first information processing apparatus connected via a network, the method comprising:
displaying data;
receiving instruction information based on an operational restriction applied to an object expressed on the data which is generated by the first information processing apparatus; and
applying the operational restriction to the object on the displayed data based on the received instruction information.

12. A computer program which when loaded into a computer and executed performs a method as claimed in any one of claims 7, 10 or 11.

13. A storage medium storing a computer program as claimed in claim 12.
